# EUROPÄISCHE PATENTSCHRIFT

(11) **EP 0 480 231 B1**
(45) Veröffentlichungstag und Bekanntmachung des Hinweises auf die Patenterteilung: **27.12.1995**
(21) Anmeldenummer: 91116202.2
(22) Anmeldetag: 24.09.1991
(51) Int. Cl.: H01S 3/105, H04B 10/04, H04B 10/06, H04B 10/12, G02F 1/21

(54) **Optisches Sende- und Empfangsmodul**
Optical emitter-receiver module
Module optique émetteur-récepteur

(30) Priorität: 09.10.1990 DE 4031970
(43) Veröffentlichungstag der Anmeldung: 15.04.1992
(73) Patentinhaber: Alcatel SEL Aktiengesellschaft, D-70435 Stuttgart (DE); ALCATEL N.V., NL-1077 XX Amsterdam (NL)
(72) Erfinder: Heidemann, Rolf, Dr., W 7146 Tamm (DE)
(74) Vertreter: Pohl, Herbert, Dipl.-Ing.

(56) Entgegenhaltungen:
- US-A- 4 446 543
- US-A- 4 533 829
- US-A- 4 887 901
- ELECTRONICS LETTERS, Band 22, Nr. 10, 8. Mai 1986 T.G. DUTHIE et al. "Bidirectional fibre-optic link using reflective modulation" Seiten 517-518

## Beschreibung

Die Erfindung betrifft ein optisches Sende- und Empfangsmodul, ein Verfahren zur Modulation des Moduls und ein optisches Übertragungssystem mit solchen Modulen.

Derartige Modulatoren finden ihre Anwendung in optischen Nachrichtenübertragungssystemen, bei denen eine Leitungsendeinrichtung, ohne eine Lichtquelle zu enthalten, das zu sendende Signal erzeugt. Der optische Träger für ein solches Sendesignal wird bei diesen Systemen in einer Zentrale erzeugt und über einen optischen Wellenleiter der Leitungsendeinrichtung zugeführt, dort moduliert, und das entstehende Sendesignal wird vorzugsweise über denselben optischen Wellenleiter übertragen.

Aus der Druckschrift Electronics Letters 8th May, Vol. 22, No. 10, Seiten 517 bis 518 ist ein System mit einem Reflexionsmodulator beschrieben. Der beschriebene Reflexionsmodulator besteht aus einem elektrooptisch aktiven Wellenleiterkoppler, der als Schalter betreibbar und in einer integrierten optischen Schaltung enthalten ist.

Er hat zwei Zweige mit je zwei Anschlüssen. Der optische Wellenleiter zur Nachrichtenübertragung ist an einem ersten Anschluß des ersten Zweiges und die Spiegelfläche an einem ersten Anschluß des zweiten Zweiges angeordnet. Durch geeignetes Schalten kann aus dem optischen Wellenleiter in den Modulator eintretendes Licht über die Spiegelfläche in den optischen Wellenleiter zurückreflektiert werden. Betrachtet man das in den Modulator eintretende Licht als einen optischen Träger und das Schalten als Modulation, so läßt sich sagen, daß durch Modulation des Trägers ein optisches Sendesignal erzeugt wird.

Der Nachteil des bekannten optischen Reflexionsmodulators liegt nun darin, daß die Justierung zwischen optischen Wellenleiter und der integrierten optischen Schaltung, in der sich der Reflexionsmodulator befindet, sehr genau sein muß und technologisch entsprechend aufwendig ist.

Der Erfindung liegt die Aufgabe zugrunde, einen optischen Reflexionswellenleiter zu schaffen, bei dem dieser Nachteil beseitigt ist.

Die Aufgabe wird durch die Merkmale des Anspruches 1 gelöst.

Weitere Ausgestaltungen der Erfindung sind den übrigen Ansprüchen und dem Rest der Beschreibung zu entnehmen.

Ein besonderer Vorteil der Erfindung liegt in der Verwendung des Reflexionsmodulators in einem Sende- und Empfangsmodul. Vorteilhaft ist, daß kein Koppler zur Aufteilung der Trägerleistung zum Teil für die Photodiode und zum Teil für die Spiegelfläche notwendig ist, und daß in dem Sende- und Empfangsmodul, in der Betriebsweise als Sendemodul, dem Sendesignal keine störenden Reflexe von der Oberfläche der Photodiode zugemischt werden.

Ein weiterer Vorteil der Erfindung liegt darin, daß die benötigten Komponenten als Serienprodukte auf dem Markt erhältlich sind.

Fünf Ausführungsbeispiele der Erfindung werden anhand von sieben Figuren beschrieben. Es zeigen:
- Fig. 1: das Grundprinzip des optischen Reflexionsmodulators,
- Fig. 2: den relativen Pegel der in die Faser zurückreflektierten Leistung über der Resonatorlänge x aufgetragen,
- Fig. 3: ein erstes Ausführungsbeispiel eines optischen Reflexionsmodulators mit einem Dickenschwinger als Schwingelement,
- Fig. 4: ein zweites Ausführungsbeispiel eines optischen Reflexionsmodulators mit einem elektrooptisch aktiven Medium zur Variation der Resonatorlänge x,
- Fig. 5: ein drittes Ausführungsbeispiel eines optischen Reflexionsmodulators mit einem Biegeschwinger als Schwingelement,
- Fig. 6: ein Ausführungsbeispiel eines erfindungsgemäße Sende- und Empfangsmoduls, und
- Fig. 7: ein Ausführungsbeispiel eines erfindungsgemäße optischen Übertragungssystems.

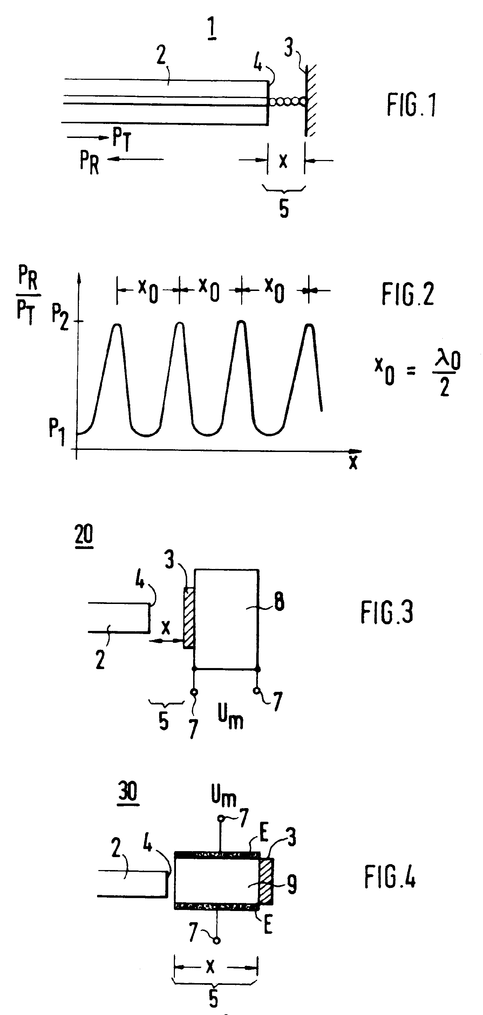

In Fig. 1 ist das Grundprinzip des optischen Reflexionsmodulators abgebildet. Im folgenden wird der optische Reflexionsmodulator einfachheitshalber nur Modulator genannt. Der Modulator 1 weist folgende Teile auf: Eine Endfläche eines optischen Wellenleiters 2, durch die Licht austritt. Diese Endfläche wird im folgenden zweite Spiegelfläche 4 genannt. Ihr gegenüberliegend ist eine erste Spiegelfläche 3 angeordnet. Die Spiegelflächen 3 und 4 liegen parallel zueinander und bilden so einen Fabry-Perot Resonator 5 mit einer Resonatorlänge x zwischen den beiden Spiegelflächen 3 und 4. Die Resonatorlänge x ist eine optische Länge, d.h. der Brechungsindex eines im Fabry-Perot-Resonator 5 enthaltenen Mediums ist berücksichtigt.

Durch die zweite Spiegelfläche 4 wird Licht mit dem Leistungspegel P_{T} in den Fabry-Perot Resonator 5 eingekoppelt und an der ersten Spiegelfläche 3 wenigstens teilweise reflektiert und somit teilweise wieder über die zweite Spiegelfläche 4 in den optischen Wellenleiter 2 zurückgekoppelt. Im Fabry-Perot Resonator 5 bildet sich dabei eine stehende Welle. Der typische Verlauf des in den optischen Wellenleiter 2 reflektierten Anteils des Lichts mit dem Leistungspegel P_{R}, bezogen auf den Leistungspegel P_{T} des eintretenden Lichts, ist in Fig. 2 über der Resonatorlänge x aufgetragen. Es ist zu erkennen, daß der relative Leistungspegel P_{R}/P_{T} zwischen einem minimalen Leistungspegel P₁, der kleiner als -40 dB ist, und einem maximalen Leistungspegel P₂ bei -8 dB periodisch schwankt. Der periodische Abstand x₀ ist die halbe Wellenlänge des Lichts, was bei einer Wellenlänge von z.B. λ₀ = 1300 nm einem Wert x₀ = 650 nm entspricht. Durch Variation der Resonatorlänge x kann somit der Leistungspegel P_{R} des in den optischen Wellenleiter 2 zurückreflektierten Lichtanteils verändert und somit der optische Träger amplitudenmoduliert werden. Diese Variation wird im folgenden als Modulationshub bezeichnet.

Die Variation der Resonatorlänge x stellt dabei lediglich eine spezielle Art einer Verstimmung des Fabry-Perot Resonators 5 dar. Der Resonator 5 kann auch durch Herauskippen einer der beiden Spiegelflächen 3, 4 aus ihrer Ebene, oder durch Verformen einer der beiden Spiegelflächen 3, 4, oder auf andere Weise oder in Kombination der oben genannten Möglichkeiten verstimmt werden. Die Realisierung eines Modulators unter Ausnützung einiger genannter Verstimmöglichkeiten wird nachstehend in den Ausführungsbeispielen gezeigt.

Um Divergenzverluste der Lichtleistung beim Austreten des Lichtes aus dem optischen Wellenleiter 2 zu reduzieren, kann der Resonator 5 im Strahlengang zwischen den beiden Spiegelflächen 3 und 4 eine Abbildungsoptik enthalten.

Aufgrund der Divergenz des aus dem optischen Wellenleiter 2 austretenden Lichts ist es nicht zwangsläufig notwendig, als Resonator einen Fabry-Perot Resonator 5 mit zwei parallel liegenden Spiegelflächen 3 und 4 anzuordnen. Wenn die Flächennormalen der beiden Spiegelflächen 3 und 4 einen Winkel einschließen, der sich von null Grad unterscheidet, wird auf diese Weise aus dem optischen Wellenleiter 2 gebeugt austretendes Licht über die erste Spiegelfläche 3 zum optischen Wellenleiter 2 zurückreflektiert. Wird der, von den Flächennormalen der beiden Spiegelflächen 3 und 4, eingeschlossene Winkel in Ruhestellung ungleich null Grad gewählt, empfiehlt es sich, den Reflexionsgrad der ersten Spiegelfläche 3 mit zunehmendem Winkel kleiner zu wählen.

Als optischer Wellenleiter 2 wird vorteilhafterweise ein Glasfaser-Lichtwellenleiter verwendet. Die zweite Spiegelfläche 4 ist dabei eine Endfläche des Glasfaser-Lichtwellenleiters, die vorzugsweise im rechten Winkel zum Glasfasermantel steht.

Die Güte des Resonators 5 kann dadurch eingestellt werden, daß der Reflexionsgrad der Spiegelflächen 3, 4 in bekannter Weise verändert wird, z.B. indem ausgewählte Schichten aufgebracht werden.

In Fig. 3 ist ein erstes Ausführungsbeispiel eines Modulators 20 abgebildet. Der Modulator 20 weist zusätzlich zu den schon in Fig. 1 abgebildeten und oben beschrieben Merkmalen als mechanische Schwingvorrichtung einen Dickenschwinger 8 in Form eines piezoelektrischen Wandlers mit elektrischen Anschlüssen 7 auf, an denen eine Modulationsspannung Uₘ, d.h. das Modulationssignal angelegt werden kann. Die erste Spiegelfläche 3 ist derart mit dem piezoelektrischen Wandler 8 verbunden, daß sich die Resonatorlänge x durch Anlegen der Modualtionsspannung Uₘ verändert.

In Fig. 4 ist das zweite Ausführungsbeispiel eines Modualtors 30 abgebildet, bei dem die Verstimmung ebenfalls durch Variation der Resonatorlänge x erfolgt. Hierzu ist zwischen zwei Elektroden E, an denen die Modulationsspannung Uₘ angelegt wird, ein doppelbrechendes Medium 9 angeordnet, dessen Brechungsindex n durch Anlegen der Modulationsspannung Uₘ veränderbar ist. Durch die Veränderung des Brechungsindexes des Mediums 9 ändert sich die Resonatorlänge x. Die erste Spiegelfläche 3 liegt auf einer Fläche des Mediums 9, die zu den Flächen, an denen die Elektroden E anliegen, rechtwinklig steht. Die zweite Spiegelfläche 4 befindet sich auf der Seite des Mediums 9, die der ersten Spiegelfläche 3 gegenüberliegt.

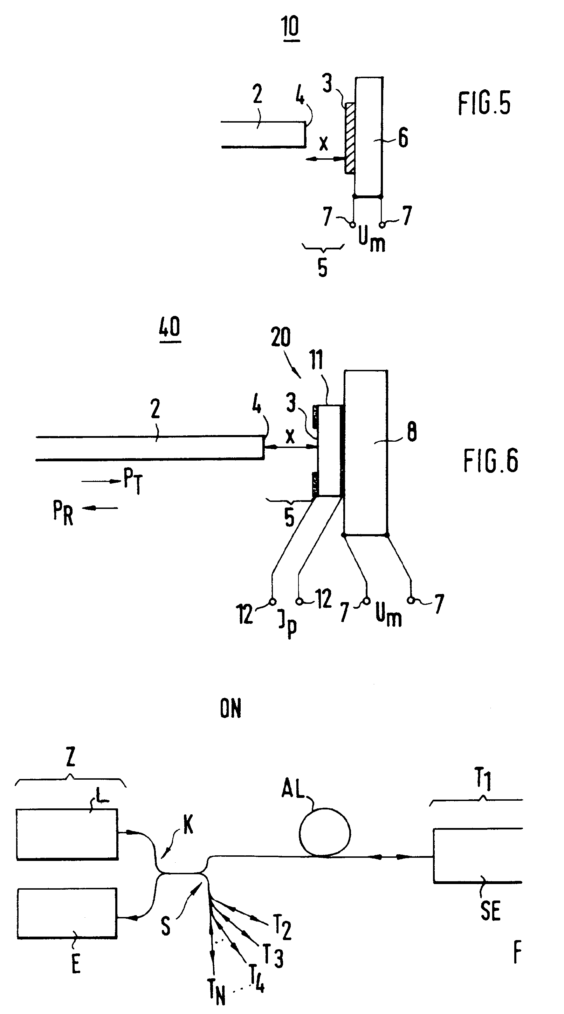

Das dritte Ausführungsbeispiel eines Modualtors 10 ist in Fig. 5 abgebildet. Bei diesem Modulator 10 ist gegenüber dem Modulator 20 aus Fig. 3 lediglich der Dickenschwinger 8 durch einen Biegeschwinger 6, vorzugsweise durch einen Schwingquarz, ersetzt. Die Verstimmung des Fabry-Perot Resonators 5 erfolgt bei diesem Modulator 10 durch eine Kombination der Variation der Resonatorlänge x und des Herauskippens der ersten Spiegelfläche 3 aus ihrer Ruheebene.

In Fig. 6 ist ein Sende- und Empfangsmodul 40 abgebildet, das mit einem erfindungsgemäßen Modulator, hier dem Modulator 20 des zweiten Ausführungsbeispiels, versehen ist. Zum Empfang von Nachrichtensignalen ist eine Photodiode 11, z.B. eine PIN-Photodiode, auf dem Dickenschwinger 8 angeordnet. Die erste Spiegelfläche 3 bildet dabei die Eintrittsfläche des Lichts in die Photodiode 11. Der erzeugte Photostrom I_{P} fließt über die Anschlüsse 12.

Die Photodiode 11 detektiert das mit der Leistung P_{T} einfallende Licht abzüglich des reflektierten Anteils. Da der erzeugte Photostrom I_{P} nur geringfügig von der Resonatorlänge x abhängt, erfolgt keine störende Modulation des Photostroms I_{P} durch die Variation der Resonatorlänge x. Ein typischer Wert der Störung liegt unter 1 dB.

Ein besonderer Vorteil des Modulators 10, 20, 30 gegenüber dem bekannten Modulator liegt in der unkomplizierten Ankopplung zwischen dem optischen Wellenleiter 2 und dem Fabry-Perot-Resonator 5. Die Modulatoren 10, 20, 30 erfordern lediglich eine Ankopplung mit der Qualität einer durchschnittlichen Wellenleiter-Photodioden-Kopplung, wohingegen für den bekannten Modulator, aufgrund seiner "integrierten optischen Wellenleiter", eine Ankopplung mit der höheren Qualität einer Wellenleiter-Laser-Kopplung notwendig ist.

Die Anordnung eines Biegeschwingers 6 in einem Sende- und Empfangsmodul 40 reduziert das Ankopplungsproblem gegenüber dem bekannten Sende- und Empfangsmodul wenigstens in der Justierrichtung, die in der Bewegungsrichtung des Biegeschwingers 6 liegt.

Die vollständige Funktionsweise des Sende- und Empfangsmoduls wird an einem Ausführungsbeispiel eines optischen Nachrichtenübertragungssystems ON erläutert. Zu dem Nachrichtenübertragungssystem ON gehört eine Zentrale Z und mehrere Teilnehmer Tᵢ mit i = 1, 2, ..., N. Beispielhaft wird nur die Übertragung von der Zentrale Z zu einem Teilnehmer T₁ und zurück beschrieben. Die Zentrale Z enthält ein Lasermodul L, das einen mit einer Frequenz f₀ = 5 MHz modulierten Träger mit einer Wellenlänge von λ₀ = 1300 nm erzeugt. Dieser modulierte Träger wird über einen Sternverteiler S und einen optischen Wellenleiter AL zu einem Sende- und Empfangsmodul SE beim Teilnehmer T₁ übertragen und dort empfangen. Im Sende- und Empfangsmodul SE wird das Licht durch den optischen Reflexionsmodulator mit einer Modulationsfrequenz f₁ = 600 kHz moduliert. Es ist dabei zu beachten, daß sich die Modulationsbänder einschließlich der Seitenbänder und der Harmonischen nicht überlagern. Das reflektierte und mit der Frequenz f₁ modulierte Signal wird nun über denselben optischen Wellenleiter AL und den Sternverteiler S zur Zentrale Z übertragen und dort über einen 3dB-Leistungskoppler K einem optischen Empfängermodul E zugeführt. Diesem ist ein elektrischer Empfänger nachgeschaltet, der das gewünschte Band, z.B. mit der Modulationsfrequenz f₁, ausfiltert und demoduliert.

Erfolgt die Modulation im Sende- und Empfangsmodul SE durch eine Schwingung der ersten Spiegelfläche 3 über mehrere Schwingungsknoten der stehenden Welle im Fabry-Perot-Resonator 5, werden aufgrund von Nichtlinearitäten auch Störmodulationen mit einem Bandabstand von jeweils der Modulationsfrequenz f₁ = 600 kHz erzeugt. Diese Störmodulationen können im Empfangsmodul E in oben beschriebener Weise elektrisch ausgefiltert werden.

Zur Übertragung vom Sende- und Empfangsmodul SE des Trägers 1 E₁ zur Zentrale Z im Basisband ist es notwendig, den Modualtionshub im optischen Reflexionsmodulator auf einen Wert von etwa λ₀/4 zu begrenzen. Der Arbeitspunkt liegt vorzugsweise von einem der Schwingungsbäuche der stehenden Welle um die Strecke λ₀/8 entfernt.

Die Übertragung von der Zentrale Z zu den Teilnehmern, wie auch in entgegengesetzter Richtung erfolgt über Signale, die mit einem NRZ (None Return to Zero)-Code codiert sind. Diese Signale können amplituden-, phasen- oder frequenzmoduliert sein.

Das optische Nachrichtenübertragungssystem ON ermöglicht es, daß mit einem einzigen, sich in der Zentrale Z befindlichen Lasermodul L über den Sternverteiler S mehrere Teilnehmer Tᵢ versorgt werden können, die ihrerseits an die Zentrale Z gerichtete Signale durch Modulation des empfangenen Trägers übertragen können. Die Identifikation der einzelnen Teilnehmersignale in der Zentrale Z erfolgt durch die Verwendung unterschiedlicher Frequenzen f₁ des Unterträgers.

Die Übertragung in Abwärtsrichtung erfolgt im Ausführungsbeispiel breitbandig, z.B. für Kabelfernsehen und Fernsprechen; die Übertragung in Aufwärtsrichtung erfolgt schmalbandig, z.B. nur für Fernsprechen. Es ist aber insbesondere bei der Verwendung des Modulators 30 des zweiten Ausführungsbeispiels auch eine symmetrische Breitbandübertragung möglich.

## Patentansprüche

1. Optisches Sende- und Empfangsmodul mit einem optischen Wellenleiter (2), einer Modulationseinrichtung und einer Photodiode (11),
- bei der die Modulationseinrichtung einen verstimmbaren optischen Resonator (5) mit einer ersten und einer zweiten Spiegelfläche (3, 4) enthält, die sich gegenüberliegend angeordnet sind, und die zweite Spiegelfläche (4) die Endfläche des optischen Wellenleiters (2) darstellt,
- bei der aus der Endfläche des optischen Wellenleiters (2) austretendes Licht nach Durchlaufen des Resonators (5) in einer hinter der ersten Spiegelfläche (3) angeordneten Photodiode (11) als Empfangssignal nachweisbar ist, und
- bei der das im Resonator (5) befindliche Licht über die zweite Spiegelfläche (4) in den optischen Wellenleiter (2) zurückkoppelbar und als Träger mit einem Modulationssignal durch eine Verstimmung des Resonators (5) modulierbar ist.

2. Optisches Sende- und Empfangsmodul nach Anspruch 1, dadurch gekennzeichnet, daß die Flächennormalen der ersten und der zweiten Spiegelfläche (3, 4) im Ruhezustand parallel sind, d.h., daß der Resonator (5) ein Fabry-Perot Resonator ist.

3. Optisches Sende- und Empfangsmodul nach Anspruch 1, dadurch gekennzeichnet, daß die Flächennormalen der ersten und der zweiten Spiegelfläche (3, 4) im Ruhezustand nicht parallel sind.

4. Optisches Sende- und Empfangsmodul nach einem der Ansprüche 1 bis 3, dadurch gekennzeichnet, daß die optische Länge des Resonators durch das Modulationssignal gesteuert variierbar ist.

5. Optisches Sende- und Empfangsmodul nach Anspruch 4, dadurch gekennzeichnet, daß zwischen den Spiegeln (3, 4) zur Variation der optischen Länge ein doppelbrechendes Medium (9) mit veränderbarem Brechungsindex angeordnet ist.

6. Optisches Sende- und Empfangsmodul nach einem der Ansprüche 1 bis 5, dadurch gekennzeichnet, daß wenigstens eine der beiden Spiegelflächen (3, 4) durch das Modulationssignal gesteuert im Winkel bewegbar angeordnet ist.

7. Optisches Sende- und Empfangsmodul nach einem der Ansprüche 1 bis 6, dadurch gekennzeichnet, daß die erste Spiegelfläche (3) zur Verstimmung des Resonators auf einer durch das Modulationssignal ansteuerbaren, mechanischen Schwingvorrichtung (6, 8) angeordnet ist.

8. Optisches Sende- und Empfangsmodul nach Anspruch 1, dadurch gekennzeichnet, daß die erste Spiegelfläche (3) die Eintrittsfläche des Lichts in die Photodiode (11) ist.

9. Verfahren zur Modulation eines optischen Sende- und Empfangsmoduls nach einem der Ansprüche 1 bis 8, dadurch gekennzeichnet, daß die Modulation des Trägers mit einem Modulationshub der Resonatorlänge (x) erfolgt, der größer als die halbe Wellenlänge (λ₀) des Trägers ist.

10. Verfahren zur Modulation von Licht mittels eines optischen Sende- und Empfangsmoduls nach einem der Ansprüche 1 bis 7, dadurch gekennzeichnet, daß die Modulation durch Variation der Resonatorlänge (x) mit einem Modulationshub kleiner als ein Viertel der Wellenlänge λ₀ des Lichts erfolgt, und der Arbeitspunkt von einem der Schwingungsbäuche der stehenden Welle einer Strecke λ₀/8 entfernt liegt.

11. Optisches Übertragungssystem mit einer Zentrale und mehreren Teilnehmern, bei dem die Teilnehmer mit optischen Sende- und Empfangsmodulen nach einem der Ansprüche 1 bis 8 zur Erzeugung eines Sendesignals ausgerüstet sind, bei dem der Träger des optischen Sendesignals mehrerer Teilnehmer in einem Lasermodul der Zentrale erzeugbar ist und dieser Träger bei den einzelnen Teilnehmern modulierbar ist, wobei der Träger bei den einzelnen Teilnehmern (T_{i′} i = 1, 2, ... N) mit einem Unterträger versehbar ist, und die Frequenz der Unterträger der einzelnen Teilnehmer (T_{i′} i = 1, 2, ... N) unterschiedlich ist.

## Claims

1. Optical transceiver module including an optical waveguide (2), a modulation device and a photodiode (11),
- wherein the modulation device comprises a detunable optical resonator (5) having a first and a second reflective surface (3, 4) arranged opposite one another and the second reflective surface (4) represents the end face of the optical waveguide (2),
- wherein, following the pass through the resonator (5), light exiting from the end face of the optical waveguide (2) is detectable as a received signal in a photodiode (11) arranged behind the first reflective surface (3), and
- wherein the light disposed in the resonator (5) can be coupled back via the second reflective surface (4) into the optical waveguide (2) and can be modulated as a carrier with a modulation signal by detuning the resonator (5).

2. Optical transceiver module according to claim 1, characterized in that, in the quiescent state, the normals of the first and second reflective surfaces (3, 4) are parallel, that is, the resonator (5) is a Fabry-Perot resonator (5).

3. Optical transceiver module according to claim 1, characterized in that the normals of the first and second reflective surfaces (3, 4) are not parallel in the quiescent state.

4. Optical transceiver module according to one of claims 1 to 3, characterized in that the optical length of the resonator can be varied in a controlled manner by the modulation signal.

5. Optical transceiver module according to claim 4, characterized in that a birefringent medium (9) having a variable refractive index is disposed between the reflective surfaces (3, 4) in order to vary the optical length.

6. Optical transceiver module according to one of claims 1 to 5, characterized in that at least one of the two reflective surfaces (3, 4) is arranged to be movable through an angle under control of the modulation signal.

7. Optical transceiver module according to one of claims 1 to 6, characterized in that, in order to detune the resonator, the first reflective surface (3) is disposed on a mechanical vibrator device (6, 8) which can be actuated by the modulation signal.

8. Optical transceiver module according to claim 1, characterized in that the first reflective surface (3) is the surface through which the light enters the photodiode (11).

9. Method for the modulation of an optical transceiver module according to one of claims 1 to 8, characterized in that the modulation of the carrier is effected with a modulation deviation of the resonator length (x), the deviation being larger than half of the wavelength (λ₀) of the carrier.

10. Method for the modulation of light by means of an optical transceiver module according to one of claims 1 to 7, characterized in that the modulation is effected by varying the resonator length (x) with a modulation deviation which is smaller than one quarter of the wavelength λ₀ of the light and the operating point is removed from one of the oscillation antinodes of the standing wave of a distance λ₀/8.

11. Optical transmission system having a central station and several subscribers, wherein the subscribers are provided with optical transceiver modules according to one of claims 1 to 8 for the generation of a transmission signal, wherein the carrier of the optical transmission signal of several subscribers can be generated in a laser module of the central station and this carrier can be modulated at the individual subscribers, with it being possible to provide the carrier at the individual subscribers (Tᵢ, i = 1, 2, ... N) with a subcarrier and the frequency of the subcarriers of the individual subscribers (Tᵢ, i = 1, 2, ... N) being different.

## Revendications

1. Module optique émetteur-récepteur, comprenant un guide d'ondes (2) optique, un équipement de modulation et une photodiode (11),
- où l'équipement de modulation contient un résonateur (5) optique dont l'accord peut être modifié, comprenant une première et une deuxième surface de miroir (3, 4), qui sont disposées l'une en face de l'autre, et où la deuxième surface de miroir (4) représente la surface extrême du guide d'ondes (2) optique,
- où la lumière quittant la surface extrême du guide d'ondes (2) optique, après avoir parcouru le résonateur (5), peut être mise en évidence dans une photodiode (11) disposée derrière la première surface de miroir (3), et
- où la lumière présente dans le résonateur (5) est couplée en réaction, par le biais de la deuxième surface miroir (4), dans le guide d'ondes (2) optique et, à titre de porteuse, peut être modulée avec un signal de modulation par une modification de l'accord du résonateur (5).

2. Module optique émetteur-récepteur selon la revendication 1, caractérisé en ce que les normales de surface de la première et de la deuxième surface de miroir (3, 4) sont parallèles à l'état de repos, ce qui signifie que le résonateur (5) est un résonateur Fabry-Perot.

3. Module optique émetteur-récepteur selon la revendication 1, caractérisé en ce que les normales de surface de la première et de la deuxième surface de miroir (3, 4) ne sont pas parallèles à l'état de repos.

4. Module optique émetteur-récepteur selon l'une des revendications 1 à 3, caractérisé en ce que la longueur optique du résonateur peut être modifiée sous la commande du signal de modulation.

5. Module optique émetteur-récepteur selon la revendication 4, caractérisé en ce que, entre les miroirs (3, 4), est disposé un milieu biréfringent (9) avec indice de réfraction variable, pour faire varier la longueur optique.

6. Module optique émetteur-récepteur selon l'une des revendications 1 à 5, caractérisé en ce qu'au moins l'une des deux surfaces de miroir (3, 4) est disposée de façon à pouvoir opérer un déplacement angulaire sous la commande du signal de modulation.

7. Module optique émetteur-récepteur selon l'une des revendications 1 à 6, caractérisé en ce que la première surface de miroir (3), pour faire varier l'accord du résonateur, est disposée sur un équipement oscillant (6, 8) mécanique pouvant être commandé par le signal de modulation.

8. Module optique émetteur-récepteur selon la revendication 1, caractérisé en ce que la première surface de miroir (3) est la surface d'entrée de la lumière dans la photodiode (11).

9. Procédé de modulation d'un module optique émetteur-récepteur selon l'une des revendications 1 à 8, caractérisé en ce que la modulation de la porteuse s'effectue avec une excursion de modulation de la longueur de résonateur (x) qui est supérieure à la demi-longueur d'onde (λ₀) de la porteuse.

10. Procédé de modulation de la lumière au moyen d'un module optique émetteur-récepteur selon l'une des revendications 1 à 7, caractérisé en ce que la modulation s'effectue par variation de la longueur de résonateur (X) avec une excursion de modulation inférieure à un quart de la longueur d'onde λ₀ de la lumière et en ce que le point de travail est éloigné d'une distance λ₀/8 d'un des ventres d'oscillation de l'onde stationnaire.

11. Système de transmission optique comprenant un central et plusieurs abonnés, dans lequel les abonnés sont équipés de modules optiques émetteur-récepteur selon l'une des revendications 1 à 8 pour la production d'un signal d'émission, dans lequel la porteuse du signal d'émission optique de plusieurs abonnés peut être produite dans un module laser du central et dans lequel cette porteuse peut être modulée chez les différents abonnés, la porteuse chez les différents abonnés (Tᵢ, i = 1, 2, ... N) pouvant être munie d'une sous-porteuse et la fréquence des sous-porteuses des différents abonnés (Tᵢ, i = 1, 2, ... N) étant différente.
